# EUROPÄISCHE PATENTSCHRIFT

(11) **EP 2 697 843 B1**
(45) Veröffentlichungstag und Bekanntmachung des Hinweises auf die Patenterteilung: **11.07.2018**
(21) Anmeldenummer: 12712585.4
(22) Anmeldetag: 31.03.2012
(51) Int. Cl.: H01M 10/6553, H01M 10/647, H01M 10/6556, H01M 10/613, H01M 2/04, H01M 2/10, H01M 2/20, H01M 10/052

(54) **AKKUPACK MIT EINER KÜHLVORRICHTUNG**
RECHARGEABLE BATTERY PACK WITH A COOLING DEVICE
ENSEMBLE ACCUMULATEUR POURVU D'UN DISPOSITIF DE REFROIDISSEMENT

(30) Priorität: 13.04.2011 DE 102011016899
(43) Veröffentlichungstag der Anmeldung: 19.02.2014
(73) Patentinhaber: ads-tec GmbH, 72622 Nürtingen (DE)
(72) Erfinder: SPEIDEL, Thomas, 71706 Markgröningen (DE)
(74) Vertreter: Wasmuth, Rolf
(86) Internationale Anmeldenummer: PCT/EP2012/001430
(87) Internationale Veröffentlichungsnummer: WO 2012/139716

(56) Entgegenhaltungen:
- DE-A1-102008 010 837
- DE-A1-102008 059 967
- JP-A- 2009 277 378
- US-A1- 2005 174 092
- US-B1- 6 512 347

## Beschreibung

Die Erfindung betrifft einen Akkupack aus einer Vielzahl einzelner Akkuzellen, die nebeneinander angeordnet sind und auf einer gemeinsamen Seitenfläche Kontaktpole aufweisen, die über Kontaktprofile elektrisch leitend miteinander verbunden werden.

Derartige Akkublocks werden sowohl bei der elektrischen Mobilität eingesetzt als auch im Energiebereich, z. B. bei Windrädern oder dgl.

Die Akkuzellen können eine beliebige chemische Struktur haben; häufig werden auf Lithium basierende Akkuzellen verwendet, die eine hohe Leistungsausbeute bei kleinem Bauraum gewährleisten. Die in einem derartigen Akkublock fließenden hohen Ströme führen zu einer erheblichen Aufwärmung der Zellen, was die Leistung eines Akkublocks beeinträchtigen oder gar schädigen kann.

Aus der US 2005/0174092 A1 ist ein Akkublock bekannt, in dem eine Vielzahl von Zellen mit - auf beiden Stirnseiten - angeordneten Kontakten über Kontaktbrücken miteinander verbunden sind. Die Kontaktbrücken sind auf den Kontaktpolen festgeschraubt. Dabei weisen die Kontaktbrücken Kühlrippen auf, die in einen Kühlkanal einragen und von einem Kühlmittel umspült werden.

Die US 6,512,347 B1 zeigt prismatische Zellen, die Seite an Seite zu einem Block zusammengefügt sind. Zwischen je zwei prismatischen Zellen ist ein Kühlblech angeordnet, welches an einer Stirnkante mit einer Kühlschlange in Verbindung steht.

Aus der JP 2009 277378 A ist ein Akkupack aus prismatischen Akkuzellen bekannt, bei dem die Kontaktpole mit plattenartigen Kontaktbrücken verschweißt sind. Jede Kontaktbrücke hat der Akkuzelle zugewandt liegende Kühlrippen, um einen Wärmeaustausch mit einem Kühlmedium zu gewährleisten. Zur Montage sind die einzelnen Kontaktbrücken anzubringen und darüber hinaus Isolierstücke vorzusehen, um das Kühlmedium zu leiten.

Der Erfindung liegt die Aufgabe zugrunde, eine Kühlanordnung für einen Akkublock anzugeben, die klein gebaut, eine effektive Kühlung gewährleistet und einfach herzustellen ist.

Die Aufgabe wird erfindungsgemäß nach den Merkmalen des Anspruchs 1 gelöst.

Die elektrisch miteinander zu verbindenden Kontaktpole einer Akkuzelle in einem Akkupack werden über ein Kontaktprofil elektrisch kontaktiert, wobei das Kontaktprofil selbst in einem Träger gehalten ist, in dem zumindest ein Kühlkanal ausgebildet ist. Das Kontaktprofil ist derart angeordnet, dass es den Kühlkanal im Träger begrenzt, wobei längs eines Kontaktprofils ein Kühlkanalabschnitt ausgebildet ist, der Teil des Kühlkanals im Träger ist. Der Kühlkanalabschnitt des Kontaktprofils ist als geschlossener Kanal mit einem Zufluss und einem Abfluss ausgebildet, wobei der so gebildete Kanal in Reihe mit dem Kühlkanal im Träger liegt. In Strömungsrichtung eines flüssigen Kühlmediums sind alle Kühlkanalabschnitte der Kontaktprofile hintereinander geschaltet und Teil des im Träger geführten Kühlkanals, so dass eine effektive Kühlung des Kontaktprofils durch das Kühlmedium und damit mittelbar eine Kühlung der Zelle selbst möglich ist.

Da das Kontaktprofil aus einem elektrisch gut leitenden und Wärme gut leitenden Material besteht und mit den Kontaktpolen einer Akkuzelle in guter wärmeleitender Verbindung steht, wird über die Kontaktpole einer Akkuzelle aus der Akkuzelle selbst Wärme abgeführt.

Werden die Akkuzellen zu einem gemeinsamen Block Seite an Seite angeordnet und die Kontaktpole derart vorgesehen, dass sie auf einer gemeinsamen Seite des Blocks liegen, können die Maßnahmen zur Kühlung in einfacher Weise auf der Kontaktseite des Akkupacks ausgebildet werden. Hierzu begrenzen alle Kontaktprofile zweckmäßig einen gemeinsamen Kühlkanal, der im Träger ausgebildet ist.

Eine gute Temperierung der Akkuzellen wird erreicht, wenn längs eines jeden Kontaktprofils ein Kühlkanalabschnitt ausgebildet ist, der Teil des Kühlkanals im Träger ist.

Um weiter Wärme aus einer Akkuzelle abzuführen, ist vorgesehen, zwischen den Kontaktpolen einer Akkuzelle ein Kühlprofil anzuordnen, das mit einer Grundseite auf der Seitenfläche der Akkuzelle aufliegt und mit einem Kühlabschnitt in den Träger einragt und den Kühlkanal begrenzt. Somit kann auch über das Kühlprofil aus dem Gehäuse einer Akkuzelle Wärme abgeführt werden. Der Kühlabschnitt des Kühlprofils ist zweckmäßig als Kühlkanalabschnitt ausgebildet, der Teil eines Kühlkanals im Träger ist.

Die Kühlkanalabschnitte des Kontaktprofils und/oder des Kühlprofils sind zweckmäßig als geschlossene Kanäle mit einem Zufluss und einem Abfluss ausgebildet. Die so gebildeten Kanäle liegen in Reihe mit einem Kühlkanal im Träger, so dass in Strömungsrichtung eines Kühlmediums alle Kühlkanalabschnitte der Profile hintereinander geschaltet sind und Teil des im Träger geführten gemeinsamen Kühlkanals sind, der zweckmäßig mäanderförmig gestaltet ist. Das Kühlmedium durchströmt abwechselnd ein Kontaktprofil und ein Kühlprofil.

Im Material der Kühlprofile sind vorteilhaft Schraubkontakte vorgesehen, über die das elektrische Potenzial eines jeden Kontaktprofils und damit der Kontaktpole jeder Akkuzelle an eine Überwachungsschaltung gemeldet werden können.

Der Kühlkanal im Träger ist durch eine Deckplatte verschlossen, die auf der Flachseite der Deckplatte dicht aufliegt. Die Deckplatte ist vorzugsweise durch Verkleben auf dem Träger befestigt. Die Schraubkontakte der einzelnen Kontaktprofile bleiben durch die Deckplatte zugängig.

Weitere Merkmale der Erfindung ergeben sich aus den weiteren Ansprüchen, der Beschreibung und der Zeichnungen, in der ein nachfolgend im Einzelnen beschriebenes Ausführungsbeispiel der Erfindung dargestellt ist. Es zeigen:
- Fig. 1: eine Anordnung eines Blockes von prismatischen Akkuzellen,
- Fig. 2: eine schematische Darstellung von Kontaktprofilen zur elektrischen Verbindung der Kontaktpole benachbarter Akkuzellen in einem Block,
- Fig. 3: eine Darstellung gemäß Fig. 2 mit montierten Kontaktprofilen,
- Fig. 4: eine schematische Darstellung von Akkuzellen eines Blockes mit anzuordnenden Kühlprofilen,
- Fig. 5: eine Darstellung von Akkuzellen gemäß Fig. 4 mit angeordneten Kühlprofilen,
- Fig. 6: einen schematischen Schnitt durch zwei Akkuzellen mit angeordnetem Träger und integrierten Kontaktprofilen und Kühlprofilen,
- Fig. 7: einen Akkublock aus Akkuzellen mit in einem Träger gehaltenen Kühlprofilen und Kontaktprofilen,
- Fig. 8: in schematischer Darstellung einen im Träger ausgebildeten Kühlkanal,
- Fig. 9: eine Darstellung nach Fig. 7 mit durch eine Deckplatte verschlossenem Träger,
- Fig. 10: eine Darstellung nach Fig. 9 mit einer auf der Deckplatte festgelegten Platine für eine Überwachungsschaltung.

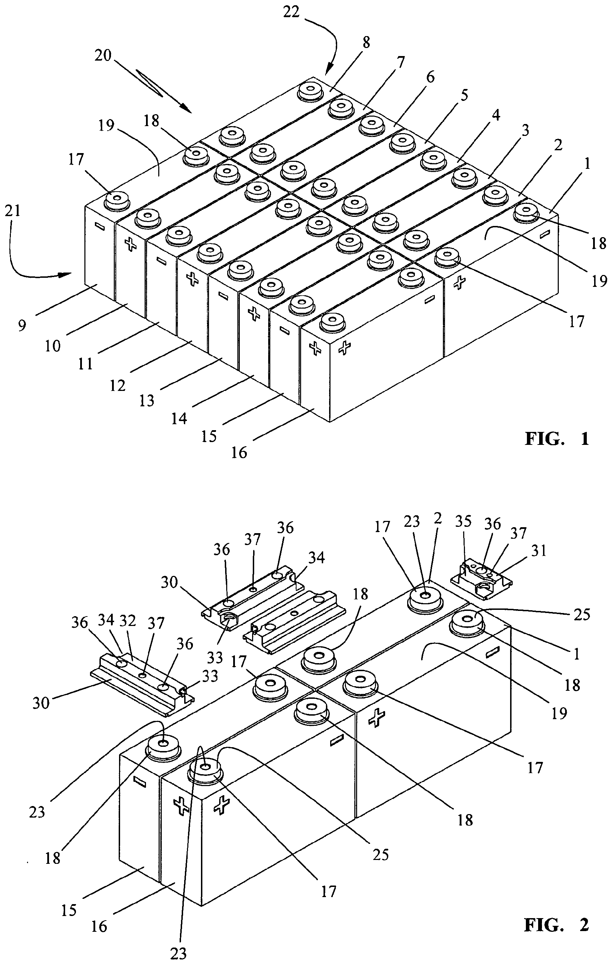

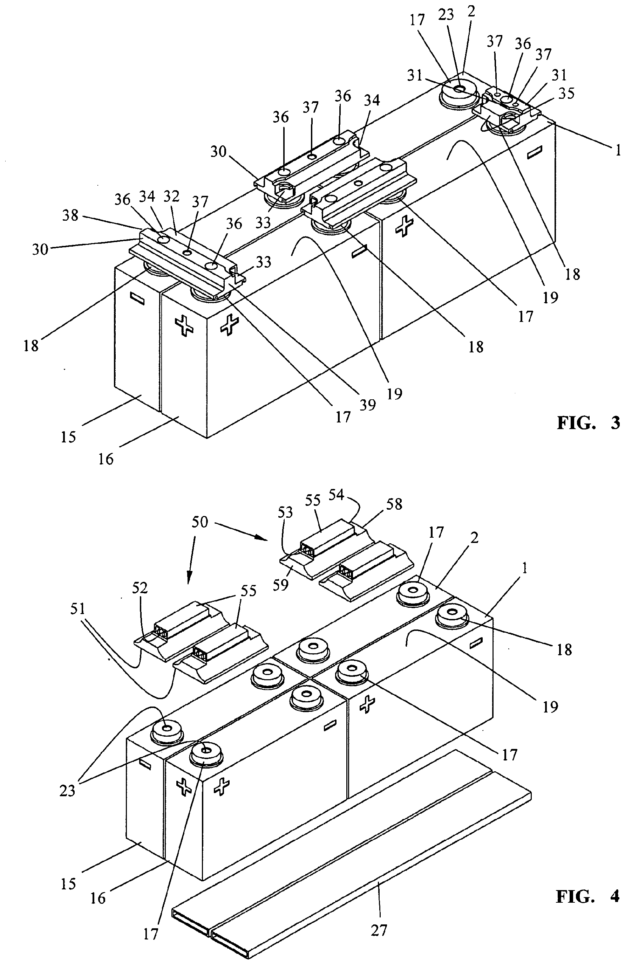

In Fig. 1 sind Akkuzellen 1 bis 16 gezeigt, die als quaderförmige, auch als prismatisch bezeichnete Zellen ausgebildet sind und - Seite an Seite angeordnet - einen gemeinsamen Block 20 bilden. Die Kontaktpole 17 und 18 jeder Akkuzelle sind auf einer Seitenfläche 19 vorgesehen, wobei alle Kontaktpole 17, 18 aller Akkuzellen 1 bis 16 auf einer gemeinsamen Seite des gemeinsamen Blocks 20 liegen. Die Kontaktpole 17, 18, d. h. der Pluspol 17 und der Minuspol 18 sind durch ein Kontaktprofil 30 mechanisch und elektrisch miteinander verbunden. Die Anordnung der Kontaktprofile 30 auf den Kontaktpolen 17 und 18 ist in Fig. 3 dargestellt. Auf dem jeweils letzten Pol einer Gesamtanordnung der Akkuzellen 1 bis 16 ist ein Abschlussprofil 31 befestigt, welches halb so groß wie ein normales Kontaktprofil 30 ist.

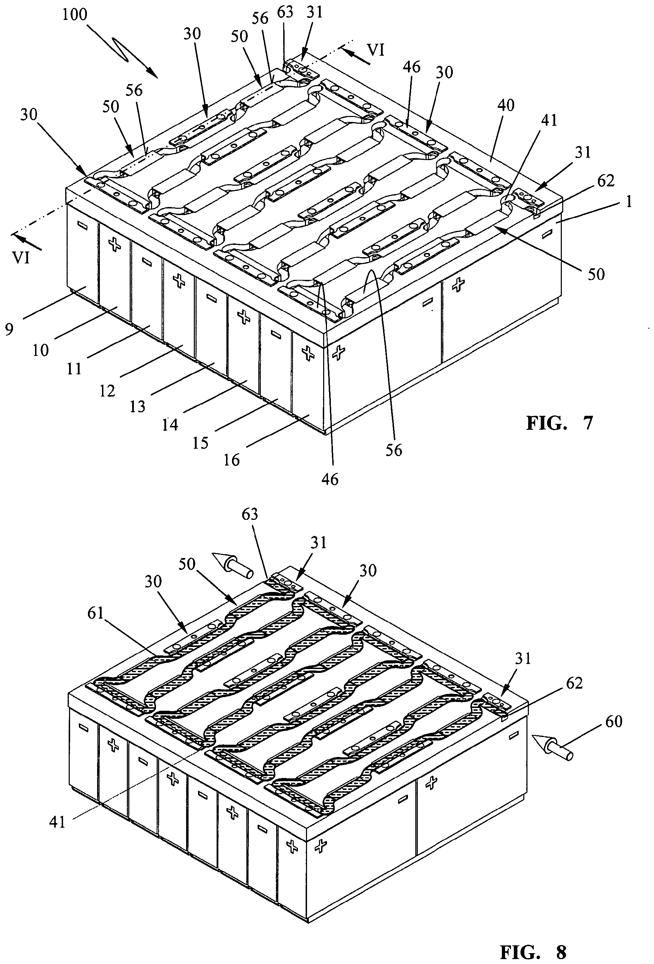

Jedes Kontaktprofil 30 weist einen Kühlkanalabschnitt 32 auf, der längs eines Kontaktprofils 30 auf einer seiner Längsseiten ausgebildet ist. Der Kühlkanalabschnitt 32 begrenzt einen Kühlkanal 41 in einen Träger 40 (Fig. 7) des gesamten Akkupacks 100. Im gezeigten Ausführungsbeispiel ist der Kühlkanalabschnitt 32 ein geschlossener Kanal mit einem Zufluss 33 und einem Abfluss 34. Entsprechend ist der Kühlkanalabschnitt 35 des Abschlussprofils 31 gestaltet.

Wie Fig. 7 zeigt, liegen die inneren Kontaktprofile 30 zueinander parallel, während die äußeren Kontaktprofile 30 an den Längsseiten 21 und 22 in Reihe hintereinander liegen. Die Kontaktprofile an den Längsseiten 21 und 22 liegen somit um 90° gedreht zu den inneren Kontaktprofilen 30 des Blocks 20 aus Akkuzellen 1 bis 16.

Jedes Kontaktprofil 30 hat im Bereich seiner Endabschnitte eine Durchgangsbohrung 36, die fluchtend mit einer vertikalen Gewindebohrung 23 in den Kontaktpolen 17 und 18 liegt. Im gezeigten Ausführungsbeispiel sind die Kontaktpole 17 und 18 zylindrische Pole; die Gewindebohrung 23 liegt im Zentrum der zylindrischen Pole.

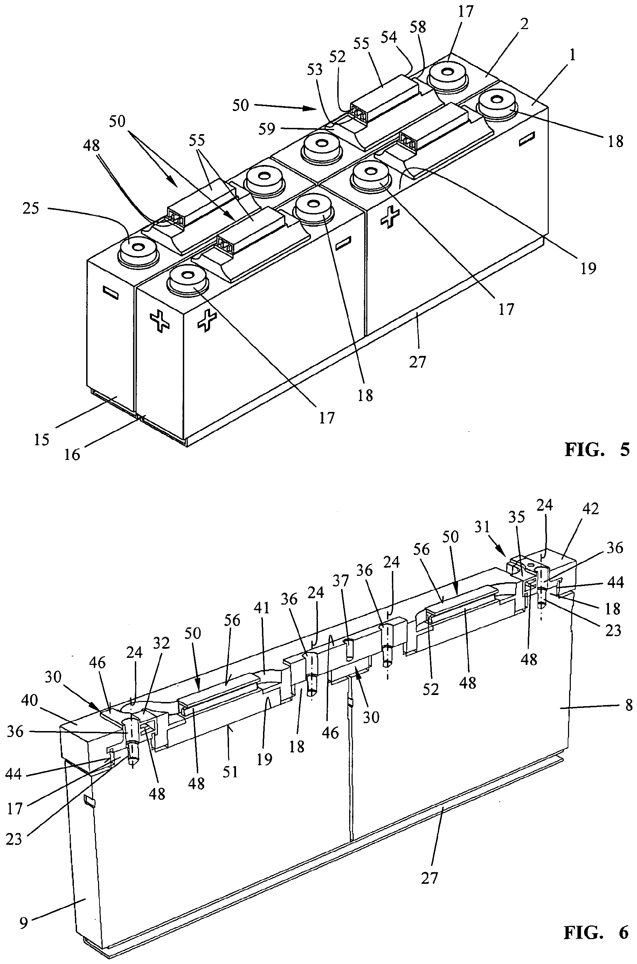

Wie Fig. 6 zu entnehmen, werden die Kontaktprofile mittels Befestigungsschrauben 24 auf den Stirnseiten 25 der Kontaktpole 17 und 18 aufgeschraubt. Da die Kontaktprofile 30 aus einem leitfähigen harten Metall bestehen, wird über ein Kontaktprofil 30 nicht nur eine elektrische Verbindung zwischen den Kontaktpolen 17, 18 hergestellt, sondern auch eine mechanische Verbindung erreicht, so dass die einzelnen Akkuzellen 1 bis 16 durch die Kontaktprofile 30 in ihrer Lage im Verbund des Blockes 20 gehalten werden.

Die Kontaktprofile 30 weisen ferner einen Schraubkontakt 37 auf, über den das elektrische Potenzial eines jeden Kontaktprofils 30 an eine Überwachungsschaltung weitergeleitet werden kann.

Die Kühlkanalabschnitte 32 sind kürzer ausgebildet als das Kontaktprofil 30 selbst, so dass ein Zufluss 33 und ein Abfluss 34 mit Abstand zu den Enden 38 und 39 des Kontaktprofils liegen. Der Zufluss 33 sowie der Abfluss 34 ist - wie insbesondere aus den Figuren 2 und 3 zu ersehen - leicht gerundet ausgebildet, um einen guten Strömungseintritt des Kühlmediums zu erzielen.

Jedes Kontaktprofil 30 verbindet im Ausführungsbeispiel zwei Kontaktpole 17 und 18 miteinander; es kann zweckmäßig sein, für eine höhere Kapazität einzelne Akkuzellen parallel zu schalten, so dass mit einem Kontaktprofil auch mehr als nur zwei Kontaktpole 17 bzw. 18 miteinander verbunden werden. Im gezeigten Ausführungsbeispiel sind alle Kontaktprofile 30 gleich ausgebildet; die beiden Abschlussprofile 31 sind ebenfalls gleich ausgebildet.

Zwischen je zwei Kontaktpolen 17 und 18 einer Akkuzelle 1 bis 16 ist optional ein Kühlprofil 50 vorgesehen, das zwischen den Kontaktpolen 17 und 18 einer Akkuzelle 1 bis 16 mit seiner Grundfläche 51 auf der ebenen Seitenfläche 19 der Akkuzelle anliegt und mit einem Kühlabschnitt 55 in den Träger 40 (Fig. 7) einragt. Im gezeigten Ausführungsbeispiel begrenzt der Kühlabschnitt 55 den im Träger 40 ausgebildeten Kühlkanal 41; bevorzugt ist der Kühlabschnitt 55 als Kühlkanalabschnitt 52 ausgebildet, der den Dachabschnitt des Kühlprofils 50 bildet. Der Kühlkanalabschnitt 52 ist zweckmäßig ein geschlossener Kanal mit einem Zufluss 53 und einem Abfluss 54. Wie Fig. 4 zeigt, liegt der Zufluss 53 und der Abfluss 54 mit Abstand zu den Enden 58 und 59 des Kühlprofils 50. Der Kühlkanalabschnitt 32 und der Kühlkanalabschnitt 52 des Kontaktprofils 30 bzw. des Kühlprofils 50 begrenzen einen im Träger 40 ausgebildeten Kühlkanal. Im gezeigten Ausführungsbeispiel liegen in Strömungsrichtung 60 eines Kühlmediums (Fig. 8) alle Kühlkanalabschnitte 32, 52 der Profile 30 und 50 hintereinander in Reihe und bilden Teile eines im Träger 40 geführten gemeinsamen Kühlkanals 41, der im Ausführungsbeispiel mäanderförmig gestaltet ist. Alle Kontaktprofile 30 und alle Kühlprofile 50 begrenzen somit einen gemeinsamen Kühlkanal 41. Alle Kühlprofile 50 sind gleich ausgebildet.

Es kann zweckmäßig sein, Bodenprofile 27 vorzusehen, die in der Breite der Breite einer Akkuzelle 1 bis 16 und in der Länge der Länge von zwei Akkuzellen entsprechen. Je zwei Akkuzellen 1, 9 stehen somit auf einem Bodenprofil 27 auf, wobei das Bodenprofil hohl ausgebildet ist und ebenfalls zur Führung eines Kühlmediums dient.

Im gezeigten Ausführungsbeispiel kann das im Kühlkanal 41 im Träger 40 geführte Kühlmedium ein Gas, beispielsweise Luft oder ein Inertgas oder auch eine Flüssigkeit sein; in entsprechender Weise kann im Bodenprofil ein Gas oder eine Flüssigkeit als Kühlmedium geführt sein.

Wie sich aus der Darstellung nach Fig. 6 ergibt, liegen die Flachseiten 46 und 56 der Kontaktprofile 30 und der Kühlprofile 50 in einer Ebene 42 mit dem Träger. Dies ergibt sich auch aus Fig. 7.

Der Träger 40 weist Aufnahmen 44 für die im Ausführungsbeispiel zylindrischen Kontaktpole 17 und 18 auf, wobei der Boden jeder Aufnahme 44 durch das Kontaktprofil 30 gebildet ist. Die Abmessungen sind zweckmäßig so getroffen, dass beim Festschrauben der im Träger 40 gehaltenen Kontaktprofile 30 auf die Kontaktpole 17, 18 die Grundflächen 51 der Kühlprofile 50 weitgehend spielfrei auf den Seitenflächen 19 der Akkuzellen 1 bis 16 aufliegen.

In Fig. 6 ist auch gezeigt, dass für einen besseren Wärmeübergang Kühlrippen 48 in den Kühlkanalabschnitten 32 und 52 ausgebildet sind. Die Kühlrippen 48 verlaufen in Längsrichtung der Kühlkanalabschnitte 32 und 52 und sind auf der dem Profil zugewandten Seite am Profil angebunden. Gegenüber der Außenwand liegen die Kühlrippen 48 mit einem Abstand.

Alle Kontaktprofile 30 und Kühlprofile 50 sowie die Abschlussprofile 31 sind in dem Träger 40 gehalten, vorzugsweise in diesem eingegossen. Das Material des Trägers 40 ist ein isolierendes Material, z. B. Kunststoff, so dass die elektrische Trennung der Kontaktprofile untereinander gewährleistet ist. In gleicher Weise ist ein Kühlmedium 61 (Fig. 8) auszuwählen, welches die elektrische Trennung der Kontaktprofile 30 untereinander gewährleistet.

Der Träger 40 und der darin ausgebildete Kühlkanal wird durch eine Deckplatte 49 verschlossen, wobei eine Dichtung eingelegt ist, die ein dichtes Abschließen des Kühlkanals 41 gewährleistet. Der Träger 40 weist einen Eintritt 62 und einen Austritt 63 für das Kühlmedium auf. Die Deckplatte 49 wird auf dem Träger 40 mechanisch festgelegt, vorzugsweise aufgeklebt, wobei Öffnungen zu den Durchgangsbohrungen 36 in den Kontaktprofilen 30 ebenso zugänglich bleiben wie die Öffnungen zu den Schraubkontakten 37 in den Kontaktprofilen 30. Lediglich die Kühlprofile 50 werden vollständig abgedeckt.

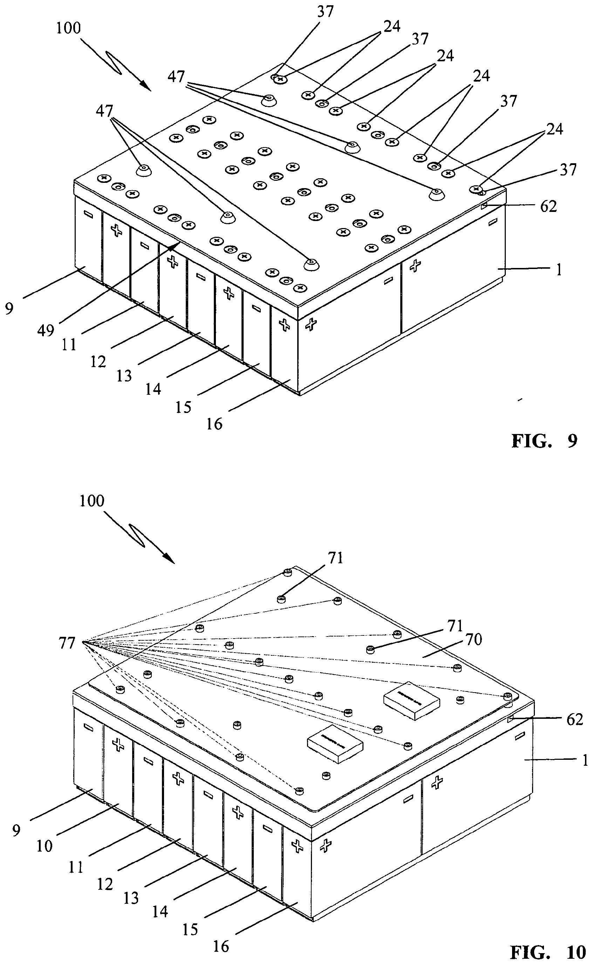

Die Deckplatte weist Haltedome 47 auf, auf denen eine Platine 70 mit einer elektronischen Überwachungsschaltung festgelegt wird. Wie Fig. 10 zeigt, ist die Platine mit sechs Befestigungsschrauben 71 auf der Deckplatte 49 festgelegt; entsprechend weist die Deckplatte 49 sechs Haltedome 47 auf.

Der Träger 40 mit den darin eingegossenen Kontaktprofilen 30 und Kühlprofilen 50 bildet zusammen mit der Deckplatte 49 eine Baueinheit, die zur Bildung eines Akkupacks 100 auf einem Block 20 von sechzehn Akkuzellen 1 bis 16 gemäß Fig. 1 aufgelegt und befestigt wird. Hierzu wird durch jede Durchgangsbohrung 36 eine Befestigungsschraube 24 eingeschraubt, wodurch sowohl die elektrische Kontaktierung der Anschlusspole 17 und 18 geschaffen als auch ein mechanischer Verbund gebildet wird. Die Öffnungen der Schraubkontakte 37 bleiben frei zugänglich.

Nach Festlegen der Platine 70 auf den Haltedomen 47 wird in jeden Schraubkontakt 37 eine Kontaktschraube 77 eingedreht, wodurch das Potenzial jedes Kontaktprofils 30 sowie der Abschlussprofile 31 an die Überwachungsschaltung angeschlossen wird. Die Überwachungsschaltung - auch Batteriemanagementsystem (BMS) genannt - kann somit jede einzelne Zelle 1 bis 16 überwachen und bei kritischen Betriebszuständen Warnungen an eine übergeordnete Zentrale abgeben bzw. selbst schützend eingreifen.

## Patentansprüche

1. Akkupack aus einer Vielzahl einzelner Akkuzellen (1 bis 16),
- wobei die Akkuzellen (1 bis 16) nebeneinander angeordnet sind,
- und die Akkuzellen (1 bis 16) auf einer Seitenfläche (19) Kontaktpole (17, 18) aufweisen,
- wobei elektrisch miteinander zu verbindende Kontaktpole (17, 18) mechanisch und elektrisch über ein Kontaktprofil (30) miteinander verbunden sind,
- und das Kontaktprofil (30) in einem Träger (40) gehalten ist,
- in dem zumindest ein Kühlkanal (41) ausgebildet ist,
- und das Kontaktprofil (30) den Kühlkanal (41) begrenzt,
- wobei längs eines Kontaktprofils (30) ein Kühlkanalabschnitt (32) ausgebildet ist, und der Kühlkanalabschnitt (32) Teil des Kühlkanals (41) im Träger (40) ist,
- charakterisiert dadurch, dass der Kühlkanalabschnitt (32) des Kontaktprofils (30) als geschlossener Kanal mit einem Zufluss und einem Abfluss ausgebildet ist,
- und der so gebildete Kanal in Reihe mit dem Kühlkanal (41) im Träger (40) liegt,
- und in Strömungsrichtung eines Kühlmediums alle Kühlkanalabschnitte (32) der Kontaktprofile (30) hintereinander geschaltet sind und Teil des im Träger (40) geführten Kühlkanals (41) sind.

2. Akkupack nach Anspruch 1,
**dadurch gekennzeichnet, dass** die Akkuzellen (1 bis 16) prismatische Zellen sind, die zu einem gemeinsamen Block (20) Seite an Seite angeordnet sind und deren Kontaktpole (17, 18) auf einer gemeinsamen Seite des Blocks (20) liegen.

3. Akkupack nach Anspruch 1 oder 2,
**dadurch gekennzeichnet, dass** alle Kontaktprofile (30) einen gemeinsamen Kühlkanal (41) begrenzen.

4. Akkupack nach einem der Ansprüche 1 bis 3,
**dadurch gekennzeichnet, dass** ein Kontaktprofil (30) auf mindestens zwei Kontaktpolen (17, 18) festgeschraubt ist.

5. Akkupack nach einem der Ansprüche 1 bis 4,
**dadurch gekennzeichnet, dass** zwischen den Kontaktpolen (17, 18) einer Akkuzelle (1 bis 16) ein Kühlprofil (50) angeordnet ist, das mit einer Grundfläche (51) auf der Seitenfläche (19) der Akkuzelle (1 bis 16) aufliegt und mit einem Kühlabschnitt (55) in den Träger (40) einragt und einen Kühlkanal (41) begrenzt.

6. Akkupack nach Anspruch 5,
**dadurch gekennzeichnet, dass** der Kühlabschnitt (55) ein Kühlkanalabschnitt (52) ist, der Teil eines Kühlkanals (41) im Träger (40) ist.

7. Akkupack nach einem der Ansprüche 1 bis 6,
**dadurch gekennzeichnet, dass** der Kühlkanal (41) im Träger ein mäanderförmig geführter gemeinsamer Kühlkanal (41) ist.

8. Akkupack nach einem der Ansprüche 1 bis 7,
**dadurch gekennzeichnet, dass** im Material der Kontaktprofile (30) Schraubkontakte (37) vorgesehen sind.

9. Akkupack nach Anspruch 8,
**dadurch gekennzeichnet, dass** die Schraubkontakte (37) elektrische Kontaktpunkte für die Potenziale der Akkuzellen (1 bis 16) sind.

10. Akkupack nach einem der Ansprüche 1 bis 9,
**dadurch gekennzeichnet, dass** die den Akkuzellen (1 bis 16) abgewandten Flachseiten (46, 56) der Kühlprofile (50) und/oder der Kontaktprofile (30) in einer gemeinsamen Ebene (42) liegen.

11. Akkupack nach einem der Ansprüche 1 bis 10,
**dadurch gekennzeichnet, dass** der Kühlkanal (41) im Träger (40) durch eine aufgelegte Deckplatte (49) dicht verschlossen ist, die auf der Flachseite des Trägers (40) dicht aufliegt.

12. Akkupack nach Anspruch 11,
**dadurch gekennzeichnet, dass** die Deckplatte (49) mit dem Träger (40) verklebt ist.

13. Akkupack nach Anspruch 11 oder 12,
**dadurch gekennzeichnet, dass** die Schraubkontakte (37) durch die Deckplatte (49) zugänglich sind.

## Claims

1. Rechargeable battery pack consisting of a plurality of individual battery cells (1 to 16),
- wherein the battery cells (1 to 16) are arranged side by side,
- and the battery cells (1 to 16) have contact terminals (17, 18) on a lateral surface (19),
- wherein contact terminals (17, 18) to be connected electrically are connected to one another mechanically and electrically via a contact profile (30),
- and the contact profile (30) is held in a base (40),
- in which at least one cooling passage (41) is formed,
- and the contact profile (30) bounds the cooling passage (41),
- wherein a cooling passage section (32) is formed along a contact profile (30) and the cooling passage section (32) is a part of the cooling passage (41) in the base (40),
- **characterised in that** the cooling passage section (32) of the contact profile (30) is designed as a closed passage with an inflow and an outflow,
- and the passage thus formed is arranged in line with the cooling passage (41) in the base (40),
- and in the direction of flow of a cooling medium all cooling passage sections (32) of the contact profiles (30) are arranged one behind the other and are a part of the cooling passage (41) in the base (40).

2. Rechargeable battery pack according to claim 1,
**characterised in that** the battery cells (1 to 16) are prismatic cells arranged side by side to form a common block (20), their contact terminals (17, 18) lying on a common side of the block (20).

3. Rechargeable battery pack according to claim 1 or 2,
**characterised in that** all contact profiles (30) bound a common cooling passage (41).

4. Rechargeable battery pack according to any of claims 1 to 3,
**characterised in that** a contact profile (30) is screw-fastened to at least two contact terminals (17, 18).

5. Rechargeable battery pack according to any of claims 1 to 4,
**characterised in that** a cooling profile (50), which lies on the lateral surface (19) of the battery cell (1 to 16) with a base surface (51), projects into the base (40) with a cooling section (55) and bounds a cooling passage (41), is located between the contact terminals (17, 18) of a battery cell (1 to 16).

6. Rechargeable battery pack according to claim 5,
**characterised in that** the cooling section (55) is a cooling passage section (52), which is a part of a cooling passage (41) in the base (40).

7. Rechargeable battery pack according to any of claims 1 to 6,
**characterised in that** the cooling passage (41) in the base is a common cooling passage (41) routed in a meander form.

8. Rechargeable battery pack according to any of claims 1 to 7,
**characterised in that** screw contacts (37) are provided in the material of the contact profiles (30).

9. Rechargeable battery pack according to claim 8,
**characterised in that** the screw contacts (37) are electric contact points for the potentials of the battery cells (1 to 16).

10. Rechargeable battery pack according to any of claims 1 to 9,
**characterised in that** the flat sides (46, 56) of the cooling profiles (50) and/or of the contact profiles (30), which are remote from the battery cells (1 to 16), lie on a common plane (42).

11. Rechargeable battery pack according to any of claims 1 to 10,
**characterised in that** the cooling passage (41) in the base (40) is tightly sealed by a cover plate (49) lying tightly on the flat side of the base (40).

12. Rechargeable battery pack according to claim 11,
**characterised in that** the cover plate (49) is adhesive-bonded to the base (40).

13. Rechargeable battery pack according to claim 11 or 12,
**characterised in that** the screw contacts (37) are accessible through the cover plate (49).

## Revendications

1. Batterie composée de plusieurs éléments de batterie individuels (1 à 16),
- les éléments de batterie (1 à 16) étant disposés côte à côte,
- et les éléments de batterie (1 à 16) comportant sur une surface latérale (19) des pôles de contact (17, 18),
- des pôles de contact (17, 18) à relier électriquement entre eux étant reliés entre eux mécaniquement et électriquement par un profilé de contact (30),
- et le profilé de contact (30) étant retenu dans un support (40)
- dans lequel est formé au moins un conduit de refroidissement (41),
- et le profilé de contact (30) délimitant le conduit de refroidissement (41),
- une section de conduite de refroidissement (32) étant formée le long d'un profilé de contact (30), et ladite section de conduit de refroidissement (32) faisant partie du conduit de refroidissement (41) prévu dans le support (40),
**caractérisée en ce que**
- la section de conduit de refroidissement (32) du profilé de contact (30) est conçue comme un conduit fermé avec une arrivée et une évacuation,
- et le conduit ainsi formé se trouve dans l'alignement du conduit de refroidissement (41) prévu dans le support (40),
- et dans le sens d'écoulement d'un agent de refroidissement, toutes les sections de conduit de refroidissement (32) des profilés de contact (30) sont montées les unes derrière les autres et font partie du conduit de refroidissement (41) qui passe dans le support (40).

2. Batterie selon la revendication 1,
**caractérisée en ce que** les éléments de batterie (1 à 16) sont des éléments prismatiques qui sont disposés côte à côte en un bloc commun (20), et dont les pôles de contact (17, 18) se trouvent sur un côté commun du bloc (20).

3. Batterie selon la revendication 1 ou 2,
**caractérisée en ce que** tous les profilés de contact (30) délimitent un conduit de refroidissement commun (41).

4. Batterie selon l'une des revendications 1 à 3,
**caractérisée en ce qu'**un profilé de contact (30) est vissé sur au moins deux pôles de contact (17, 18).

5. Batterie selon l'une des revendications 1 à 4,
**caractérisée en ce qu'**il est prévu entre les pôles de contact (17, 18) d'un élément de batterie (1 à 16) un profilé de refroidissement (50) qui est posé avec une surface de base (51) sur la surface latérale (19) de l'élément de batterie (1 à 16), et qui entre avec une section de refroidissement (55) dans le support (40) et délimite un conduit de refroidissement (41).

6. Batterie selon la revendication 5,
**caractérisée en ce que** la section de refroidissement (55) est une section de conduit de refroidissement (52) qui fait partie d'un conduit de refroidissement (41) prévu dans le support (40).

7. Batterie selon l'une des revendications 1 à 6,
**caractérisée en ce que** le conduit de refroidissement (41) prévu dans le support est un conduit de refroidissement commun (41) sinueux.

8. Batterie selon l'une des revendications 1 à 7,
**caractérisée en ce qu'**il est prévu, dans le matériau des profilés de contact (30), des contacts à vis (37).

9. Batterie selon la revendication 8,
**caractérisée en ce que** les contacts à vis (37) sont des points de contact électriques pour les potentiels des éléments de batterie (1 à 16).

10. Batterie selon l'une des revendications 1 à 9,
**caractérisée en ce que** les côtés plats (46, 56) des profilés de refroidissement (50) et/ou des profilés de contact (40) qui sont opposés aux éléments de batterie (1 à 16) sont situés dans un plan commun (42).

11. Batterie selon l'une des revendications 1 à 10,
**caractérisée en ce que** le conduit de refroidissement (41) prévu dans le support (40) est fermé de manière étanche par une plaque de recouvrement scellée (49) qui est posée de manière étanche sur le côté plat dudit support (40).

12. Batterie selon la revendication 11,
**caractérisée en ce que** la plaque de recouvrement (49) est reliée au support (40) par collage.

13. Batterie selon la revendication 11 ou 12,
**caractérisée en ce que** les contacts à vis (37) sont accessibles à travers la plaque de recouvrement (49).
